# EUROPEAN PATENT APPLICATION

(11) **EP 1 195 972 A2**
(43) Date of publication of application: **10.04.2002**
(21) Application number: 01308574.1
(22) Date of filing: 08.10.2001
(51) Int. Cl.: H04M 1/23, H04M 1/725, H04M 1/2745

(54) **Wireless communication device with multiple, interchangeable programmable keyboards**

(30) Priority: 06.10.2000 US 680217
(71) Applicant: AT&T Corp., New York, NY 10013-2412 (US)
(72) Inventor: Pearson, Gwen L., Yardley, Pennsylvania 19067 (US)
(74) Representative: Suckling, Andrew Michael

(57) **Abstract**

A wireless communication device with interchangeable keyboards includes a control circuitry capable of sending and receiving a wireless transmission. A user interface is operatively connected to the control circuitry for sending and receiving signals to a user. Also included is a first input device having a plurality of buttons in which the first input device is operatively connected to and selectively removable from the control circuitry. A second input device has a plurality of buttons in which the second input device is operatively connected to the control circuitry when the first input device is operatively disconnected from the control circuitry. At least a button of the second input device is capable of initiating the wireless transmission with a preprogrammed location identifier when a user depresses the button.

## Description

### Technical Field

The present invention generally relates to the field of wireless communication; in particular to a wireless communication device having multiple, interchangeable keyboards having keys that are programmable.

### Background of the Invention

Wireless communication devices include, by way of example, portable telephones, radiotelephones, cellular radiotelephones, cordless radiotelephones, personal communication devices and other communication devices separate from a communication network by a free space media. Cellular radiotelephones traditionally communicate with a cellular tower connected to a communication network to provide wireless communications for a user. Cellular radiotelephones have become a widely accepted form of wireless communications and have rapidly found applications in new types of communication systems such as personal communication systems ("PCS") and personal communication networks ("PCN"). As wireless communication devices become more affordable, they have become almost indispensable for many people both on and off the road, at home and at work.

While wireless communication devices have become more available, they have not become much easier or simpler to operate for large segments of the population, including children, the elderly, and people with certain types of disabilities. In general, wireless communication devices available on the market are provided with a 12-button keypad having small buttons that are difficult to operate for certain groups of people. To make a phone call with a wireless phone, a caller must complete a series of steps in a specific order where most of the steps require fine motor control of the hand and fingers, including dialing 10 to 11 or more digits. This problem becomes more apparent with the advent of the increase in the number of area codes and, moreover, users are required to dial local telephone numbers using such area codes under the North American Numbering Plan ("NANP"). Some examples of the complexities of completing a connection on a wireless phone include the following: (1) knowing when to press and not press the digit "1" before the phone number; (2) knowing and dialing the area code; (3) knowing and dialing the seven digit phone number; (4) pressing the talk/send button to start the call; and (5) pressing the end button at the conclusion of the call. Moreover, in many cases, users may be required to enter a Personal Identification Number ("PIN") after receiving a continuous tone after step (4).

Adding to the overall complexity, the exact steps required for a wireless phone are generally different from the steps required for a traditional land-based wired phone. The wireless dialing task is difficult for several groups of users. For example, the wireless calling task is difficult for small children for several reasons, including the need to memorize phone numbers, the number of steps and the fine motor skills required. The task of wireless calling is difficult for certain groups of disabled or elderly people who lack fine motor controls of the hands and/or memory skills. Therefore, a wireless communication device that has an ergonomic, easy to use and streamlined design is needed.

Another problem with wireless communication devices concerns multifunction wireless communication devices that are web enabled or combination personal digital assistant ("PDA") radiotelephone type devices. While these new devices offer more potential for enhanced services, these devices have complex functions and generally have small keys that are difficult to operate for some users. The task of typing in web site addresses, memorizing, spelling and/or using the correct sequence of characters can be a difficult task.

Attempts to simplify the operation of wireless communication devices have included deleting a majority of the control circuitry and keypad, and forcing the user to call a service provider to connect the call. This system causes users to first connect through an operator, rather than directly contacting another phone connected to a public telephone network. This concept is illustrated in U.S. Patent No. 6,035,217 to Kravtiz. The wireless phone cannot be used in a conventional manner, i.e., dialing a number from the phone, and there is no interchangeability between a 12-button keypad and the single button permanently housed on the phone.

Other attempts to simplify the use of wireless communication devices relate to contacting emergency service, such as 911, with a pre-programmed phone number by the manufacturer. The American Automobile Association offers a wireless phone that has a single button with their AAA logo to dial a service center. U.S. Patent No. 5,365,570 to Boubelik discloses a "911" button on a radio telephone housing and an optional 12-button keypad.

Interchangeability of parts of a wireless phone is known. Interchangeability is known, for example, for non-functional faceplates that can be changed to provide an aesthetic appeal to the user. This concept is illustrated in U.S. Patent No. 5,982,881 to Mischenko. Also, U.S. Patent No. 5,848,152 to Slipy et al. discloses changeable faceplates. Additionally, the concept of cosmetic phone faceplates is disclosed in U.S. Patent No. 5,768, 370 to Maatta et al.

Thus, what is needed is a wireless communication device that provides quick and simple wireless access to new groups of users without the aforementioned drawbacks of conventional wireless communication device technology, but will allow, at a user's selection, a phone to be adapted to operate as a conventional wireless telephone or as an easy to use communication device.

### Summary of the Invention

In view of the foregoing, the present invention is directed to a wireless communication device for wireless communication via a wireless network that includes control circuitry capable of sending and receiving a wireless communication message, and a user interface operatively connected to the control circuitry for sending and receiving signals to a user. Also included is a first input device having a plurality of buttons in which the first input device is operatively connected to and is adapted to be selectively removable from the control circuitry and replaced with a second input device. The second input device has a plurality of buttons in which the second input device is operatively connected to the control circuitry when the first input device is operatively disconnected from the control circuitry and at least a button of the second input device is capable of initiating the wireless communication message for completing a connection via the wireless network to a preprogrammed location identifier.

Another aspect of the present invention includes a wireless communication device for wireless communication via a wireless network that includes a control circuitry for controlling a wireless communication signal. The device also includes an antenna for receiving and sending the wireless communication signal; a microphone operatively coupled to the control circuitry; and a speaker operatively coupled to the control circuitry. A receiver is operatively coupled to the antenna for receiving the wireless communication signal and a transmitter is coupled to the antenna for sending the communication signal. The wireless communication device also includes a display operatively coupled to the control circuitry for the user. The device further includes a first keypad having a first button array that is coupled to the control circuitry and can be removed from the control circuitry. A second keypad having a second button array is interchangeable with the first keypad such that the second keypad replaces the first keypad. Also the second button array on the second keypad has buttons responsive to user input to provide a connection via the wireless network to a location identifier associatively mapped to each button. This advantageously provides a device for ease of use for the user.

Yet another aspect of the present invention includes a wireless communication device for wireless communication via a wireless network having a first mode of operation in which a removable first keypad when coupled to the wireless communication device operates such that the first keypad cooperates with the control circuitry to dial a plurality of telephone numbers. The wireless communication device has a second mode of operation in which a removable second keypad operates the wireless communication device such that a plurality of keys of the second keypad cooperates with the control circuitry to call a plurality of predetermined telephone numbers from a memory by a single actuation of a key within the plurality of keys. This allows the device to be selectively modular by the user.

Another aspect of the present invention is a method of operating a wireless communication device having interchangeable keypads. The method includes selecting a button designation in order to form a target button for programming. Next the user selects a sequence of alphanumeric characters to create a dataset. The user then indicates the dataset to be associated with the target button. The dataset is stored for later use and the user initiates a wireless communication transmission with the target button including the dataset.

There are several objects of the current invention for use as a wireless communication device. It is an object of the present invention to provide a first user, such as a parent or care giver, to use either a conventional wireless keypad or large button keypad. It is yet another object of the present invention to provide a second large button keypad that allows calls using one button dialing. It is another object of the present invention to allow a user to program a set of numbers or data for use with the second large button keypad. Another object of the invention allows a user to remove the conventional keypad and replace it with a large button keypad. Yet another object of the present invention provides for a user such as a child or elderly family member with mental or physical limitations to easily use the device to initiate wireless communication to the preprogrammed numbers.

These and other objects, features and advantages of the present invention will be apparent upon consideration of the following detailed description thereof, presented in connection with the following drawings, in which like reference numerals identify the elements throughout.

### Brief Description of the Drawings

FIG. 1 is a plan view of an embodiment of the present invention showing a wireless communication device and a first input device according to the present invention;
FIG. 2 is a plan view of an embodiment of the present invention showing a wireless communication device and a second input device according to the present invention;
FIG. 3 is a plan view of an embodiment of the second input device of FIG. 2.;
FIG. 4 is a block diagram of a wireless communication device according to the present invention;
FIG. 5 is a flow diagram of programming a predetermined location identifier for the second input device;
FIG. 6 is a block diagram of a programming system for the second input device; and
FIG. 7 is an isometric view of the wireless communication device of FIG. 1 configured to accept the fist or second input device of the present invention.

### Detailed Description

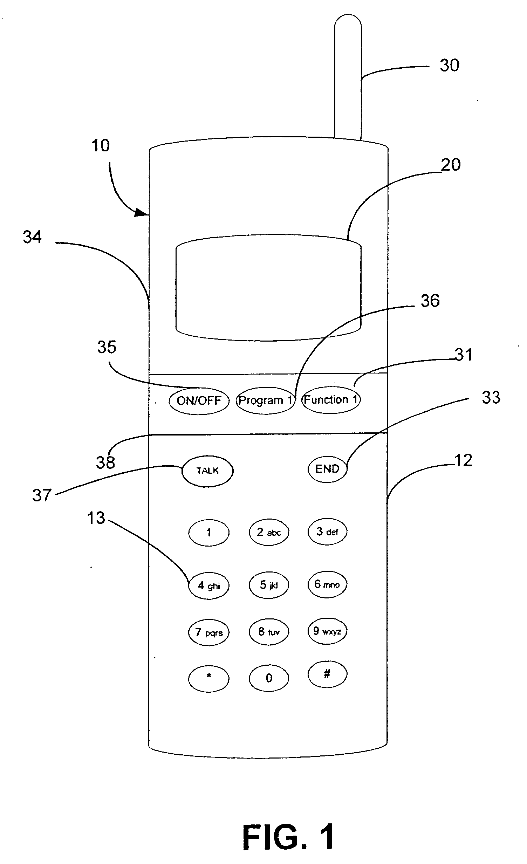

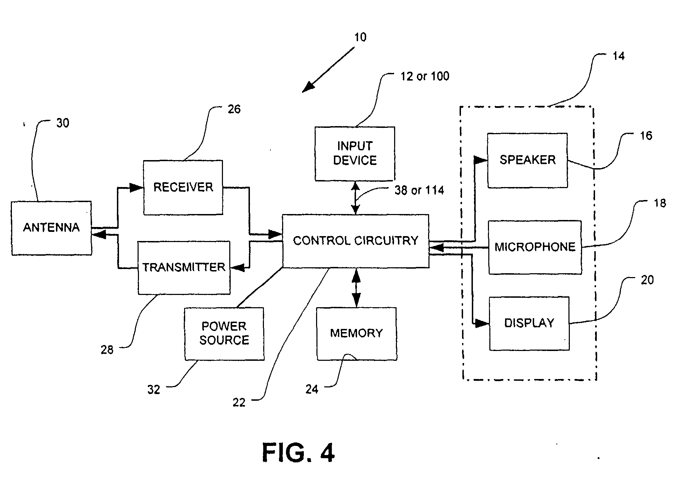

There is shown in FIGS. 1-7 an illustration of an embodiment of the present invention, a wireless communication device 10 with a first input device 12 and a second input device 100 that is interchangeable with the first input device 12.

Referring to FIGS. 1-4, one embodiment of the present invention is a wireless communication device 10, such as a wireless phone, or cellular radiotelephone with an interchangeable second input device 100, such as a keypad having large programmable buttons. The wireless communication device 10 has electronic components and software including a user interface 14, a control circuitry 22, a memory 24, a receiver 26, a transmitter 28, an antenna 30, electric power source 32, and a housing 34. The electric power source 32 provides the electric power to operate the wireless communication device 10 components and functions. The housing 34 encloses the aforementioned internal components of the wireless communication device such as the control circuitry 22, the memory 24, the receiver 26, and the transmitter 28.

The wireless communication device 10 may optionally further include a function button 31, and communication end button (not shown) and a talk button (not shown). The function button 31 may be connected to the control circuitry 22 to perform a specific function such as programming any instructions. The device 10 includes a power button 35 for generally activating and deactivating the electric power source 32 when required by the user.

The user interface 14 is the part of the wireless communication device 10 that provides audio and visual signals to a user of the device 10. The user interface 14 is operatively connected to the control circuitry 22. The user interface 14 includes a speaker device 16, a microphone device 18, and a display device 20. The speaker device 16 provides audible signals to the user of the wireless device 10. The microphone device 18 receives audio input from the user and converts the signals into the appropriate format for the control circuitry 22 to use the signals. The display device 20 provides visual signals to the user in the form of alphanumeric characters, colors or graphical symbols. The display device 20 may be any well known device used in wireless communication devices such as a liquid crystal display.

The control circuitry 22 includes hardware and software that provides for a device, such as a wireless phone, to operate in a wireless communication network (not shown). The control circuitry 22 may include a microprocessor (not shown), and digital signal processor (not shown) for use on digital networks. Also typically included is operating microsoftware and network interface software that enables the wireless communication device 10 to connect to the wireless communication network. The wireless communication network may include digital networks, packet switched, PCS, PCN and other networks. These networks have a host of services such as text messaging for wireless phones or other services like the well-known Wireless Application Protocol ("WAP") for operating devices in a Wireless Application Environment ("WAE"), which WAP and WEA standards are herein incorporated by reference. For example, a user may send an e-mail message to an existing mobile phone operating in a PCS environment.

The control circuitry 22 also includes connection to the receiver 26, the transmitter 28, the memory 24, and the first input device 12. The memory 24 stores data installed or programmed by the user, this may include telephone phone numbers, individual names, calling party designations, web addresses, e-mail addresses or other similar data. The memory 24 is any programmable type in which nonvolatile storage can be electrically erased and reprogrammed. Possible alternatives include flash memory, flash ROM, RAM with battery backup.

The control circuitry 22 also interfaces with the second input device 100 when the first input device 12 is operatively disconnected from the control circuitry 22. The wireless communication device 10 may also include software such as Wireless Application Protocol ("WAP") or other software for wireless World Wide Web access.

The receiver 26, transmitter 28 and antenna 30 provide the function of allowing the wireless communication device 10 to connect to the wireless communication network (not shown). The receiver 26 is operatively coupled to the antenna 30 for receiving a wireless communication transmission or message. The transmitter 28 is also operatively coupled to the antenna 30 for sending a wireless communication transmission or message. The antenna 30 sends and receives a wireless communication transmission or message in the form of radio frequency ("RF") signals to a receiving station (not shown) connected to the wireless communication network.

The first input device 12 also includes communication end button 33, and a talk button 37. Depressing the communication end button 33 typically terminates a wireless communication through a wireless network. Depressing the talk button 37 typically completes a call to the wireless communication device 10 from another device connected to the wireless communication network.

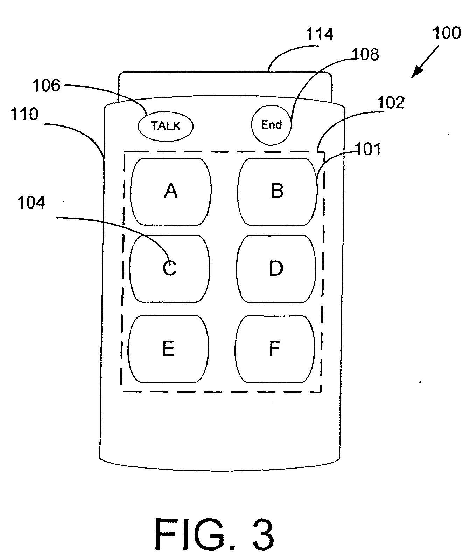

The second input device 100 is interchangeable with the first input device 12 enabling the wireless communication device 10 to be selectively modular by the user. This is accomplished by selectively decoupling and removing the first input device 12 from the control circuitry 22 and subsequently coupling the second input device 100 to the control circuitry 22 and housing 34. Referring to FIG. 3, in a preferred embodiment, the second input device 100 may be a keypad having a button array 102. The second input device 100 may include a second housing 110 and a second interface 114 that operatively couples the input device 100 to the control circuitry 22. The second housing 110 may be a partial housing that physically matches and is interchangeable with the housing 34 on the wireless communication device 10.

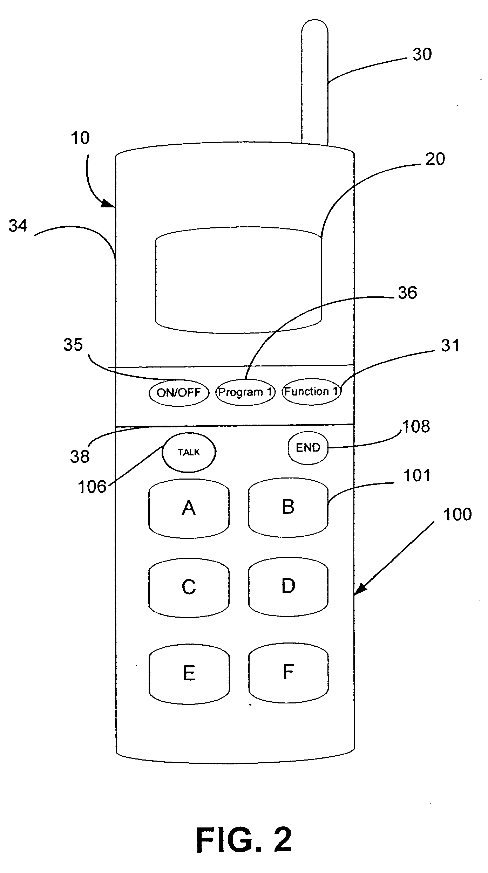

As shown in FIGS. 2-4, the second interface 114 serves to operatively connect the second input device 100 into the control circuitry 22. In a preferred arrangement, the second interface 114 mates and connects with a mating interface 38 of the wireless communication device 10. The first interface 114 may be formed as a male type pin connector designed to mate with the mating interface 38 that may be formed as a female or open grooved connector on the wireless communication device 10. The second interface 114 and mating interface 38 may be of other shapes or designs depending on the preference of the designer. The first input device 12 may have a similar interface in construction and operation as the second interface 114, and the interface of the first input device 12 will similarly mate with the mating interface 38. In yet another arrangement, the wireless communication device 10 has two interface connections, an interface for the first input device 12 and a separate one for the second input device 100. In this arrangement, the second interface 114 connects with another interface on the wireless communication device 10. For connections to the control circuitry 22, the housing 34 in this arrangement includes a plurality of metallic pins or contacts. The contacts may be located on the second input device 100 and complementary connections on the housing 34.

Referring to FIGS. 2-3, the second input device 100 includes the second button array 102 having a plurality of buttons for one-button connection to a location identifier. In general, a location identifier is an end point connected to a communication network, including wireless and public switched network, in which an unique address is so associated therewith. For one-button connection to a location identifier, the user depresses or actuates the second button 101 or any other button within the button array 102. The one-button connection to a location identifier may include: dialing a preprogrammed telephone number associated with a wireless device or wireline device; connecting to a uniform resource locator address; a mobile phone enabled to receive text messages or data that can be transferred from the wireless communication network. For convenience, a representative button within the button array 102 is designated as numeral 101 and referred to as the second button. The depression of the second button 101 causes the control circuitry 22 to be responsive to a predetermined location identifier associated with the unique second button 101. This causes the device to make the connection to the predetermined location identifier as desired by the user. The wireless communication device 10 preferably makes an outgoing call to a telephone number in response to a user actuating a button.

Referring to FIGS. 2-3, the second button 101 within the second button array 102 has a periphery or surface area larger than the periphery or surface area of the first button 13 located on the first input device 12. The second button 101 may be sufficiently sized to allow a finger of the user to reliably depress the second button 101. The size of the second button 101 preferably improves the usage of the wireless communication device 10 for users who have reduced motor control of the fingers, or other users, such as children, who have not sufficiently developed fine motor control of the fingers. In one arrangement, the size relates to a specific surface area associated with an individual button or key. The specific surface area is generally defined as a measure of the extent of the area covered by the upper surface of a key. The larger size of the keypad buttons or keys provides ergonomic benefits for the users. One can appreciate that the quantity of buttons may vary as a function of the size of the wireless communication device 10. The button array 12 shown is a representation of a conventional 12-button keypad (i.e., 0-9, *, # keys). The size of the second button array 102 may vary. As shown in FIG. 3, the array 102 is 2 x 3 or, in other words, six buttons; or the number of buttons may range between two buttons to ten buttons. Further, the number of interchangeable second input devices 100 can be numerous.

The shape of the individual buttons within the second button array 102 is preferably designed to allow an individual lacking fine motor skills or dexterity to reliably identify and select a button or key for dialing. The shape of the buttons may vary as rectangular, square, oval, circular or other shapes. While the second button array 102 is shown with physical buttons, the second button array 102 may have large touch-sensitive keys such that the user may assert a minimal pressure to cause the wireless communication device 10 to contact the preprogrammed location identifier associated with the key. Regarding the surface area of a button or key, the area may be calculated by conventional methods. For example, the surface area of a square or rectangular shape is the mathematical product of the length of two sides. If the shape is irregular or not found in common formula references, numeric computational methods can be employed. Optionally, the second input device 100 includes an energizing button 106 that when depressed powers responsively by the user, or activates the wireless communication device 10. Also, the second input device 100 may include an "END" or "STOP" button 108 for deactivating a wireless transmission session between the user and another communication device connected to the network. The "STOP" button may be in the shape of an octagon with a red color to allow associative representation of the function of the button with familiar surroundings. This is helpful for children who might not completely understand the function of a button designated as "END".

The second button 101 on the second input device 100 allows a user to designate an associative representation of a preprogrammed location identifier. The identification of the desired button for dialing provides the user with a designation of the function of the second button 101 so as to allow simpler operation on the wireless communication device 10. For example, the user may designate a specific number associated with a place of employment as "WORK", a medical sign for a doctor, or an "Rx" for pharmacy. The user has the choice to designate the button as determined by their preference. This can be accomplished by labeling the buttons directly or labeling the second housing 110 proximate to the respective button. If desired, the button 101 may have a braille designation feature for visually impaired users. The large buttons provide an improved surface area for the braille lettering. Further, the one-button dialing is advantageous for use with visually impaired persons due to the increased difficulty of conventional dialing phone numbers and internet URL sites.

The modes of operations will now be described. According to the present invention, the wireless communication device 10 has at least three modes, a first mode with the first input device 12 installed on the housing 34 and connected to the control circuitry 22. Also, a second mode is formed when the second input device 100 is operatively connected to the control circuitry 22 and the first input device 12 is disconnected or connected thereto. Also, a third mode is formed, wherein the wireless communication device 10 does not have the first input device 12, nor the second input device 100, installed. In a preferred embodiment, the wireless communication device 10 in the first mode operates substantially similar to a wireless telephone, cellular phone, PCS cellular phone or equivalent, thereby allowing the user to dial a location identifier such as a telephone number, in a conventional manner, as a sequence of numbers or characters for connecting to the wireless communication network. The user retains the second input device 100 for later installation.

In the second mode, the user disengages and removes the first input device 12 from the wireless communication device 10. The user then replaces and connects the second input device 100. In the second mode, the wireless communication device 10 operates with features associated with the preprogrammed location identifier, as described earlier, with the second button 101. The interchangeable feature allows the wireless communication device 10 to be selectively modular by a user, in which the user can preprogram a plurality of location identifiers such as, important telephone numbers.

The second button array 102 is enabled to perform one button connection of a preprogrammed location identifier. The user of the wireless communication device 10 in the second mode, such as child or elderly person, depresses the desired button within the second button array 102. Then the device 10 contacts and connects through the wireless communication network to the desired preprogrammed location identifier. For example, the user, such as parent of a child, may give the wireless communication device 10 in the second mode to a babysitter. The parent will have preprogrammed a location identifier such as a phone number of their wireless telephone (not shown) or an alert text message mapped to the second button 101. Anywhere the babysitter is, as long as a wireless transmission can be made, the babysitter may simply push the preprogrammed button 101 to contact or alert the parents. Likewise, in the business environment, the limited reduced buttons and limited feature of the wireless communication device 10 in the second mode facilitates the reduction of additional cost to businesses. In another arrangement, the second button 101 may be mapped to a location identifier such as a URL existing on the World Wide Web. This configuration is useful for e-commerce transactions or special purpose Internet sites.

In the third mode, the wireless communication device 10 operates such that the device may receive a wireless communication transmission from the wireless network. In the third mode, wireless communication device 10 may be configured by the user or manufacturer to automatically answer after a predetermined number of ring indications. Optionally, the device 10 may be configured not to automatically answer an incoming call until the first input device 12 or the second input device 100 is installed on the wireless communication device 10. The choice depends on the operating environment of the device 10 and/or the designer's preference. In addition, the wireless communication device 10 may be configured to receive data from the wireless communication network this may include programming data or network connection information as typical with cellular, PCN, PCS, and satellite communication networks. The present invention is not limited to the modes designations as described in that the first, second, and third modes are used for illustrative purposes.

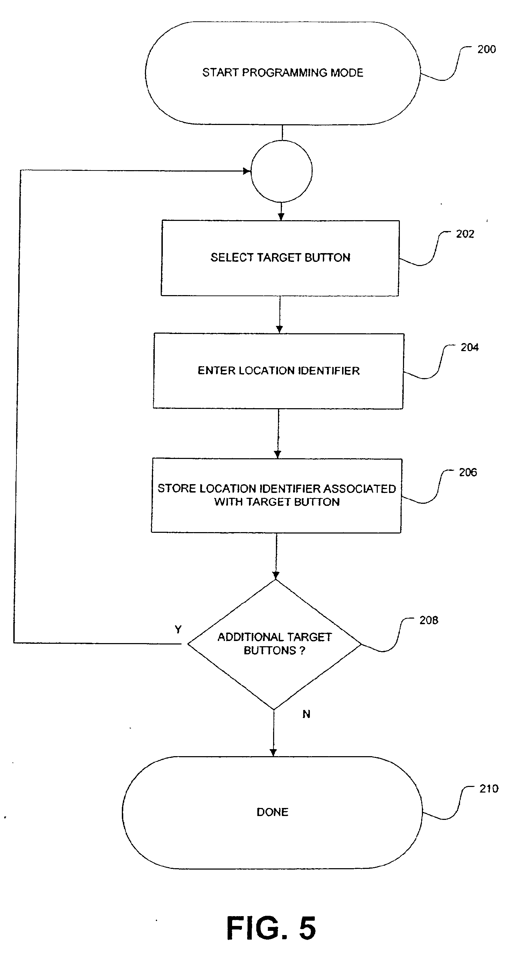

FIG. 5 illustrates a flow of steps according to the present invention of programming the second input device 100 in which the second input device 100 initiates a connection by using a single button associated with a user-programmed location identifier. In step 200, the programming sequence is started. In step 202, the user is requested to select the target or desired button for programming. Next, in step 204, the user then enters or indicates the desired location identifier that will be logically mapped to the target button. Then the user, in step 206, stops or saves the programming of the target button. In step 208, the user is asked if more buttons are desired for programming. If the user selects additional programming, then control is transferred to step 202. If the user has completed programming, the control is transferred to step 210. In step 210, the programming the target button(s) is completed. The user may now install the second input device 100 on the wireless communication device 10. The above discussed steps may be implemented, for example, in the control circuitry 22 as software instructions or program steps. Also several location identifiers may be grouped into a speed dial or call lists for software implementation.

The following is a description of how a user may preprogram several speed call lists using the first input device 12. The user attaches first input device 12 to the communication device 10. Next the user turns on the device 10 and selects a "2^{nd} keypad" option from a main menu shown on the display 20 of the communication device 10. The "2^{nd} keypad" option may have a menu with the several user selectable choices. A view/edit list option allows the user to review the speed call lists and to enter or phone numbers or other data for each button 101 mapped on the second input device 100. A set list option allows the user to set the speed call list to be used with the second input device 100 in which a default setting is a speed call such as list number 1. Each speed call list contains the numbers or data associated with each button 101 on the second input device 100. Optionally, users may have a plurality of speed call lists. Only one speed call list may be used with the second input device 100 at a time. The users may interchange each speed call list for the second input device 100 by changing the specific call list in this set list option.

The program steps allow for adding another speed call list. The user selects an option such as "view/edit lists". In this option the display 20 shows the available speed call lists. The user scrolls to a specific speed call list and selects it. The name of the list may be edited, in which the display 20 shows the speed call list name and allows the user to enter/edit the name. For example, the user may enter a name for a specific list such as "Contacts". User can then review the data in the specific list. Each item in the list shows the associative identifier for the button 101 on the second input device 100 (such as "A"), the phone number and a text description or name if one has been entered. If the list is empty or having no data, the user enters a phone number for the list location and may enter an associative name for the number such as "Office". This phone number is associated with a call button 101 on the second input device 100. The user enters a second number and subsequent numbers for each location on the speed call list. If the list has numbers in it, the user may scroll through the list and edit specific names and numbers as needed.

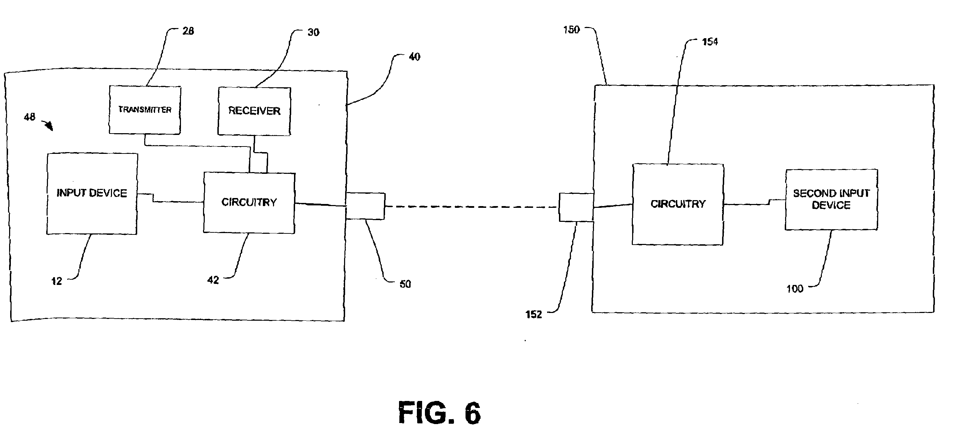

Referring to FIG. 6, the second input device 100 may be programmed using a programming system. The programming system may include a first programming station 40 and a second programming station 150. The first programming station 40 may embody a wireless radiotelephone or wireless cellular phone, both adapted to receive interchangeable keypads according to the present invention. Also, the first programming station 40 may embody a personal digital assistant ("PDA") or general purpose computer having software and hardware according to the present invention. The first input device 12 may include a standard 12-button keypad, keyboard, or other device that provides numbers and characters.

The first programming station 40 includes operating circuitry 42, a data interface 48, and a first data link port 50. The operating circuitry 42 may include software and hardware to program the second input device 100. The data interface 48 may include the first input device 12 or another device to create a dataset for the wireless communication device 10. In one arrangement, the first input device 12 is operatively coupled to a first programming device 40. In yet other arrangement, the first input device 12 is operatively coupled and is selectively removable from the first programming station 40. Also, the first data link port 50 includes hardware and software that is coupled to the operating circuitry 42 that allows the first programming station 40 to transfer information and data to the second programming station 150. Optionally, the first programming station 40 may include the receiver 30, transmitter 28, and user interface 14; in that the first programming station 40 may not necessarily be the same as the wireless communication device 10, but may be at the designer's preference. The fewer components of the first programming station 40 advantageously reduce manufacturing costs.

The second programming station 150 may include a second data link port 152 and a circuitry 154 for transferring data to the second input device 100. The second programming station 150 may be embodied by the wireless communication device 10 having the second input device 100 installed. This programming configuration allows the second input device 100 to be retained on a second wireless communication device 10 (not shown). The data link between the first and second programming station 40, 150 may be a hardwired or wireless type of connection such as infrared or RF. The hardwired connection may be a serial type data transfer. The wireless connection may be the widely available communication standards, such as the Infrared Data Association ("IrDA") specification and protocols. The IrDA communication protocol provides low-cost, short-range, cross-platform, point-to-point communications at various transfer rates for devices employing the standardize protocol. There are various suppliers of IrDA compatible hardware for transceivers and interfacing software.

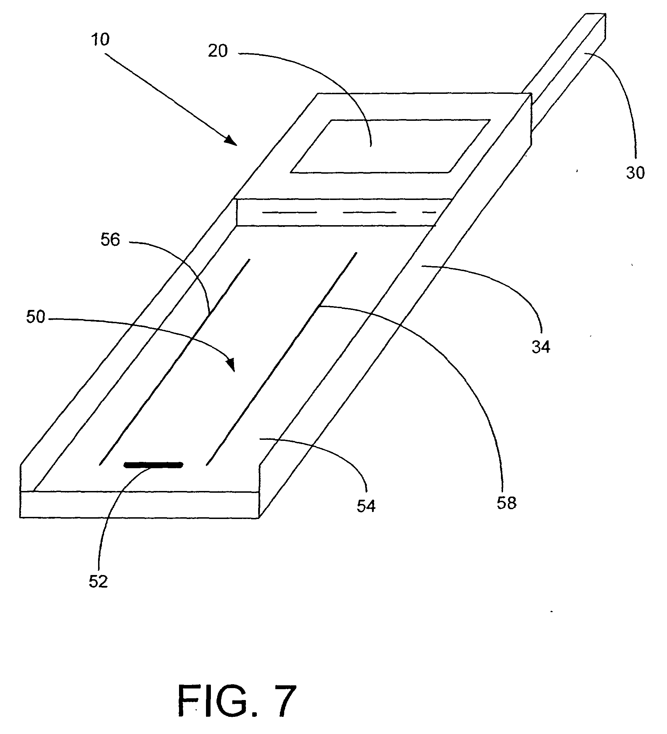

FIG. 7 illustrates an embodiment of the wireless communication device 10 in the third mode and configured to accept input device 12, 100. The housing 34 of the wireless communication device 10 encloses and protects the internal components, including the control circuitry 22, memory 24, receiver 26 and transmitter 28. The user interface 14 is connected to the housing 34. The housing 34 of the wireless communication device 10 includes an input device receiving portion 50 and a locking member 52. The input device receiving portion 50 is generally the part of the housing 34 that is designed to receive and retain the first input device 12 and second input device 100. The input device receiving portion 50 includes a base 54, and two opposing grooves 56, 58 for slidably guiding the second input device 100 to mate with the first interface 38. This construction is also applicable to the first input device 12. The wireless communication device 10, the first input device 12, second input device 100 and various other features as taught by the present invention are manufactured and assembled from various components.

According to the present invention, a kit may be provided to consumers and businesses. The kit may include the wireless communication device 10, having the first input device 12 and the second input device 100, the programming station 150, associated instructions (not shown) for operation, and an enclosure (not shown) for retaining the components. The kit would be provided to distributors, retailers, and wireless communication service providers. Also, the wireless communication device 10 may be sold separately with the first input device 12, thereby allowing the consumer to purchase the second input device 100 as an optional feature for later use. In addition, the second input device 100 may be sold separately, thereby allowing the consumer to retain a plurality of the second input device 100 for other data.

The wireless communication device 10 may have a modular capability. The first input device 12 may be attached to the control circuitry 22 and the second input device 100 may be used as an extender or accessory item. The second interface may be located on the side of the housing 34 to accept the second input device 100 at the interface. In this configuration, the wireless communication device 10 has the add-on feature of a device 100 that allows for connecting to a location identifier upon actuation of a button 101. Further, the second input device 100 may be easily programmed with the first input device 12 and other components of the wireless communication device 10. In this arrangement, it is appreciated that second input device 100 may have a plurality of buttons more than the first input device 12. The second input device 100, however, will have ergonomic buttons 101 sized for ease of user operation.

All United States patents referred to herein shall be deemed incorporated by reference for all purposes as to their entire contents. While these particular embodiments of the invention have been shown and described, it is recognized that the various modifications thereof will occur to those skilled in the art. Therefore, the scope of the herein-described invention shall be limited solely by the claims appended hereto.

## Claims

1. A wireless communication device for wireless communication via a wireless network, comprising:
a control circuitry for controlling transmission and reception of sending and receiving a communication message by the wireless network;
a user interface operatively connected to the control circuitry for sending and receiving signals to a user; and
a first input device having a plurality of buttons wherein the first input device is operatively connected to and adapted to be removed from the control circuitry and replaced with a second input device, the second input device having a plurality of buttons such that at least one button of the second input device upon a single actuation being capable of initiating the communication message for completing a connection via the wireless network to a preprogrammed location identifier.

2. The wireless communication device of claim 1, wherein the button of the second input device has a specific surface area greater than any numeric button of the first input device for allowing a user to easily depress the button of the second input device.

3. The wireless communication device of claim 1, wherein the button of the second input device is selectively designateable by a user to provide associative representation of the preprogrammed location identifier.

4. The wireless communication device of claim 1, wherein the user interface includes a display, a microphone, and a speaker.

5. The wireless communication device of claim 1, wherein the preprogrammed location identifier is a telephone number.

6. The wireless communication device of claim 1, wherein the first input device is a standard keypad operatively capable of allowing a user to create a sequence of alphanumeric characters.

7. The wireless communication device of claim 1, wherein the location identifier is a telephone number.

8. The wireless communication device of claim 1, wherein the location identifier is a uniform resource location.

9. The wireless communication device of claim 1, wherein the location identifier is an internet protocol address.

10. The wireless communication device of claim I, further comprising a memory.

11. The wireless communication device of claim 1, wherein the first input device is used to program at least one button of the second keypad with the location identifier.

12. The wireless communication device of claim 1, further comprising a housing having an input device receiving portion.

13. A wireless communication device for wireless communication via a wireless network, comprising:
a control circuitry for controlling a wireless communication signal;
an antenna for receiving and sending the wireless communication signal;
a microphone coupled to the control circuitry;
a speaker coupled to the control circuitry;
a receiver operatively coupled to the antenna for receiving the wireless communication signal;
a transmitter coupled to the antenna for sending the wireless communication signal;
a display coupled to the control circuitry; and
a second keypad removably coupled to the control circuitry, the second keypad having a button array, the second keypad being interchangeable with a first keypad such that the second keypad replaces the first keypad, the button array having buttons responsive to user input for completing a connection via the wireless network to a location identifier selectively associated to each button.

14. The wireless communication device of claim 13, further comprising a memory coupled to the second keypad for retaining a plurality of location identifiers operatively associated with the second button array.

15. The wireless communication device of claim 14, further comprising a station for programming the second keypad.

16. The wireless communication device of claim 15, further comprising a link coupled to the control circuitry for communication with the station, wherein the first keypad serves as an input device for programming a plurality of location identifiers.

17. A wireless communication device for wireless communication via a wireless network, comprising:
an antenna for sending and receiving a wireless transmission to a wireless network;
a transmitter for sending the wireless transmission;
a receiver for receiving the wireless transmission;
a control circuitry for controlling the wireless transmission and connected to the transmitter and the receiver;
a speaker connected to the control circuitry; and
a microphone connected to the control circuitry; the wireless communication device further having a first mode of operation and a second mode of operation;
the first mode of operation in which a removable first keypad when coupled to the wireless communication device cooperates with the control circuitry to dial a plurality of telephone numbers; and
the second mode of operation in which a removable second keypad having a plurality of keys, when coupled to the wireless communication device cooperates with the control circuitry to connect to a preprogrammed telephone number from a memory by a single actuation of at least one key of the second keypad.

18. The wireless communication device of claim 17, wherein the first keypad cooperates with the control circuitry to store a plurality of telephone numbers associated with the second keypad.

19. The wireless communication device of claim 17, further comprising a third mode of operation in which the first keypad and second keypad are operatively disconnected from the control circuitry such that a user may receive the wireless transmission.

20. A method of operating a wireless communication device having interchangeably removable keypads for connecting to a wireless communication network, comprising the steps of:
selecting a button designation thereby forming a target button;
selecting a sequence of alphanumeric characters to create a dataset;
indicating the dataset with the target button;
storing the dataset; and
initiating a wireless communication transmission with the target button.

21. The method of claim 20, further comprising the step of actuating the target button.
